# EUROPÄISCHE PATENTSCHRIFT

(11) **EP 1 620 632 B1**
(45) Veröffentlichungstag und Bekanntmachung des Hinweises auf die Patenterteilung: **29.08.2012**
(21) Anmeldenummer: 04728102.7
(22) Anmeldetag: 17.04.2004
(51) Int. Cl.: F16J 15/32

(54) **SPEICHENZENTRIERTE BÜRSTENDICHTUNGSANORDNUNG IN EINER GASTURBINE**
HUB-CENTERED BRUSH SEAL ARRANGEMENT FOR USE IN A GAS TURBINE
SYSTEME DE JOINT A BROSSE A CENTRAGE PAR RAYONS DANS UNE TURBINE A GAZ

(30) Priorität: 08.05.2003 DE 10320450
(43) Veröffentlichungstag der Anmeldung: 01.02.2006
(73) Patentinhaber: MTU Aero Engines GmbH, 80995 München (DE)
(72) Erfinder: BÖCK, Alexander, 82288 Kottgeisering (DE)
(86) Internationale Anmeldenummer: PCT/DE2004/000810
(87) Internationale Veröffentlichungsnummer: WO 2004/101957

(56) Entgegenhaltungen:
- EP-A- 0 495 256
- WO-A-82/03657
- DE-A- 10 122 732
- DE-A- 19 628 559
- GB-A- 643 604
- US-A- 3 019 035
- US-A- 4 767 267
- US-B1- 6 402 157

## Beschreibung

Die Erfindung betrifft eine Anordnung für eine nicht-hermetische Dichtung zwischen einem Stator und einem Rotor einer Gasturbine nach dem Oberbegriff des Patentanspruchs 1.

Bei Gasturbinen, insbesondere bei Flugzeugtriebwerken, gibt es eine Reihe von Anwendungsfällen, in welchen zwei gegeneinander rotierende Teile, nämlich ein Stator und ein Rotor der Gasturbine, gegen den die Gasturbine durchlaufenden Gasstrom abzudichten sind. Ein derartiger Anwendungsfall ist zum Beispiel die Abdichtung eines Spalts, der zwischen statorzugehörigen, feststehenden Leitschaufeln und einem Rotor eines Flugzeugtriebwerks ausgebildet ist. Zur Abdichtung ringförmiger Zwischenräume zwischen relativ zueinander rotierenden Baugruppen sind aus dem Stand der Technik Bürstendichtungen bekannt. Derartige Bürstendichtungen sind zum Beispiel aus der DE 196 28 559 A oder der DE 101 22 732 A bekannt. Spezielle Lösungen zur Verhinderung von Fehlmontage durch geeignete Bürstendichtungsgeometrien sind aus der US-B-6 402 157 bekannt. Bei den obigen, aus dem Stand der Technik bekannten Bürstendichtungen wird die Bürstendichtung vorzugsweise von mehreren drahtartigen Borsten gebildet, die um einen Kern gewickelt sind und am Kern über einen Klemmring fixiert sind. Die Einheit aus Klemmring, Kern und Borsten, welche die eigentliche Bürstendichtung bildet, ist in einem Aufnahmeraum angeordnet, welcher zwei Führungselemente umfasst, wobei die Führungselemente mittels mehrer Niete miteinander verbunden sein können. Weiterhin ist es aus dem genannten Stand der Technik bekannt, derartige Bürstendichtungen speichenzentriert auszugestalten, wobei mindestens drei Lagerstellen mit je einem translatorischen Freiheitsgrad die Speichenzentrierung gewährleisten. Derartige Lagerstellen werden durch Gleitelemente, insbesondere Gleitsteine gebildet, wobei ein Gleitstein in eine entsprechende Nut eingreift. Bei dem genannten Stand der Technik sind die Gleitelemente ein- oder beidseitig axial vorstehend an der Bürstendichtung angeordnet. Durch die Speichenzentrierung sind primär durch thermische Einflüsse bedingte relative Maßänderungen zwischen den koaxial angeordneten, sowie gegeneinander abzudichtenden Bauteilen besser ausgleichbar.

Nach dem Stand der Technik sind die Gleitelemente, insbesondere die Gleitsteine, vorzugsweise als separate Baugruppen ausgebildet. Die Gleitsteine sind zum Beispiel durch Nieten mit den Führungselementen verbunden. Beim Aufnieten der Gleitsteine ergeben sich große Fertigungstoleranzen, was letztendlich zu einer schlechten Konzentrizität der Bürstendichtung führt. Weiterhin bewirkt das Aufnieten der Gleitsteine einen großen Montage- bzw. Fertigungsaufwand. Des weiteren muss am jeweiligen Führungselement, an welchem die Gleitsteine aufgenietet werden, ausreichend Platz für das Aufbringen der Nietverbindungen vorgesehen sein. Dies führt zu einem erhöhten Platzbedarf der Dichtungsanordnung, wodurch der Einsatzbereich und damit die Anwendbarkeit derselben beschränkt wird. Die Versionen mit ein- oder beidseitig axial vorstehenden, integralen Gleitelementen sind hinsichtlich Platzbedarf und Kinematik ebenfalls problematisch.

Hiervon ausgehend liegt der vorliegenden Erfindung das Problem zu Grunde, eine neuartige Anordnung für eine nicht-hermetische Dichtung zwischen einem Stator und einem Rotor einer Gasturbine vorzuschlagen, welche hinsichtlich Platzbedarf, Präzision und Funktionssicherheit vorteilhaft ist.

Dieses Problem wird dadurch gelöst, dass die eingangs genannte Anordnung für eine nicht-hermetische Dichtung zwischen einem Stator und einem Rotor einer Gasturbine durch die Merkmale des kennzeichnenden Teils des Patentanspruchs 1 weitergebildet ist.

Erfindungsgemäß ist zwischen den Abdeck- bzw. Führungselementen ein zusätzliches Distanz- bzw. Versteifungselement mit radialen und integralen Gleitelementen vorgesehen. Hierdurch ist mit einfachen konstruktiven Mitteln eine exakte Speichenzentrierung realisierbar. Da die nach dem Stand der Technik vorzugsweise als separate Bauelemente ausgebildeten Gleitelemente nunmehr integraler Bestandteil des Distanz- bzw. Versteifungselements sind, reduziert sich der Montage- bzw. Fertigungsaufwand. Die Erfindung erlaubt daher eine Kostenreduktion. Auch ist dadurch, dass die nach dem Stand der Technik erforderliche Verbindung der Gleitelemente mit dem Distanz- bzw. Versteifungselement entfällt, eine reduzierte radiale Bauhöhe möglich.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: einen Ausschnitt aus einer erfindungsgemäßen Anordnung für eine nicht-hermetische Dichtung zwischen einem Stator und einem Rotor einer Gasturbine in stark schematisiertem Querschnitt; und
- Fig. 2:: einen Ausschnitt aus der Anordnung gemäß Fig. 1 in stark schematisierter Seitensicht.

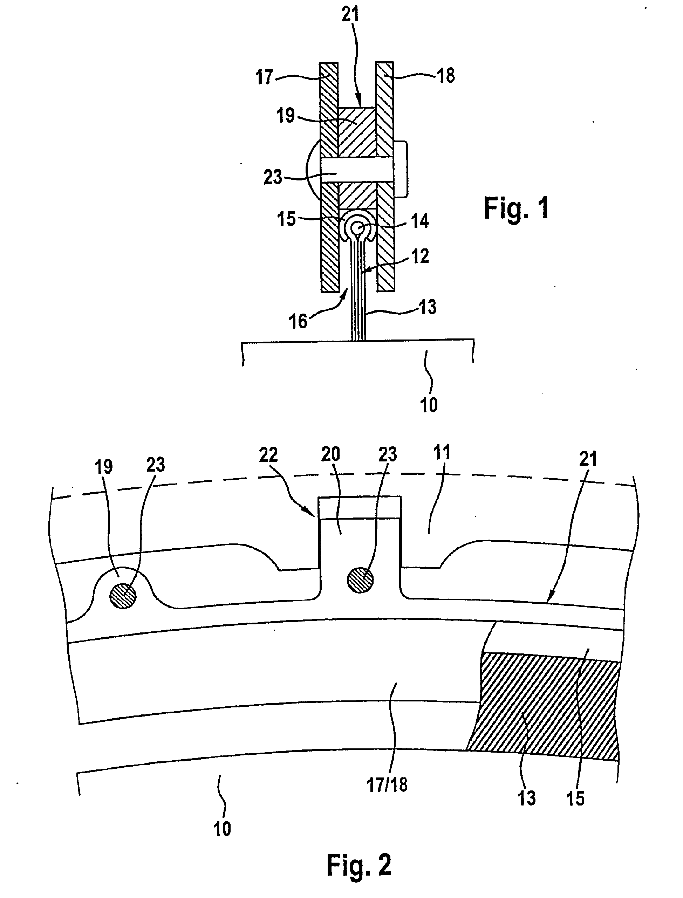

Fig. 1 und 2 zeigen eine bevorzugte Ausführungsform der erfindungsgemäßen Dichtungsanordnung in stark schematisierten Darstellungen. Fig. 1 zeigt einen Querschnitt durch die erfindungsgemäße Dichtungsanordnung, Fig. 2 zeigt eine Seitenansicht.

Die in Fig. 1 und 2 dargestellte Dichtungsanordnung dient der Abdichtung eines radialen Spalts zwischen einem Rotor 10 und einem Stator 11 einer Gasturbine, nämlich eines Flugzeugtriebwerks. Bei dem Rotor 10 handelt es sich um einen mit sogenannten Laufschaufeln beschaufelten Rotor. Dem Stator 11 sind feststehende Leitschaufeln zugeordnet, die an einem ebenfalls feststehenden Gehäuse der Gasturbine befestigt sind. Die feststehenden Leitschaufeln sind demnach statorzugehörig. Die Leitschaufeln bilden ein sogenanntes Leitschaufelgitter und sind konzentrisch um den Rotor 10 angeordnet. Die erfindungsgemäße Dichtungsanordnung dient nun der Abdichtung des radialen Spalts im Fußbereich der statorzugehörigen, rotorkonzentrisch angeordneten Leitschaufeln.

Zwischen dem Rotor 10 und dem Stator 11 ist eine Bürstendichtung 12 positioniert. Die Bürstendichtung 12 wird von mehreren drahtartigen Borsten 13 gebildet, die um einen stabförmigen Kern 14 herumgebogen sind und am Kern 14 mithilfe eines vorzugsweise im Querschnitt c-förmigen Klemmrings 15 fixiert sind.

Die Bürstendichtung 12 aus Borsten 13, Kern 14 und Klemmring 15 ist in einem Aufnahmeraum 16 positioniert, der von einem zwischen zwei Abdeck- bzw. Führungselementen 17, 18 angeordneten Distanz- bzw. Versteifungselement 19 gebildet wird. In diesem Aufnahmeraum 16 ist die Bürstendichtung 12 formschlüssig gegen Auslenkung in beide Axialrichtungen fixiert. Die den Aufnahmeraum 16 seitlich begrenzenden Abschnitte der Führungselemente 17, 18 können des weiteren der Abstützung der Borsten 13 der Bürstendichtung 12 dienen. Diese Abschnitte der Führungselemente 17, 18 können demnach die sogenannte Stützplatte sowie Deckplatte für die Bürstendichtung 12 bilden.

Es liegt nun im Sinne der hier vorliegenden Erfindung, dass Gleitelemente 20, die der Speichenzentrierung dienen, in das Distanz- bzw. Versteifungselement 19 derart integriert sind, dass die Gleitelemente 20 einen integralen Bestandteil des Distanz- bzw. Versteifungselements 19 bilden und demnach keine separaten Baugruppen mehr sind. Hierzu ist eine dem Stator 11 zugewandte Begrenzungsfläche 21 des Distanz- bzw. Versteifungselements 19 profiliert ausgebildet, d.h. Erhebungen in der Begrenzungsfläche 21 bilden die Gleitelemente 20. Dies kann insbesondere Fig. 2 entnommen werden.

Wie ebenfalls Fig. 2 entnommen werden kann, greifen die als integrale Bestandteile des Distanz- bzw. Versteifungselements 19 ausgebildeten Gleitelemente 20 in dem Stator 11 zugeordnete Vertiefungen bzw. Ausnehmungen 22 ein. Durch die Kombination der Gleitelemente 20 und Ausnehmungen 22 wird eine Lagerstelle gebildet, die eine translatorische Bewegung mit einem Freiheitsgrad in radialer Richtung ermöglicht. Eine derartige Speichenzentrierung erlaubt den Ausgleich der unterschiedlichen, durch thermische Einflüsse bedingten Maßänderungen von Rotor 10 und Stator 11 beim Betrieb der Gasturbine. Diese unterschiedliche Maßänderung wird dadurch hervorgerufen, dass Rotor 10 und Stator 11 unterschiedliche Wärmekapazitäten aufweisen und so thermische Einflüsse unterschiedliche Auswirkungen auf die Ausdehnung von Rotor 10 und Stator 11 haben können.

Da die Bürstendichtung 12 den Rotor 10 konzentrisch umgibt und neben der Bürstendichtung 12 auch die Abdeck- bzw. Führungselemente 17, 18 sowie das Distanz- bzw. Versteifungselement 19 ringförmig ausgebildet sind, können die Abdeck- bzw. Führungselemente 17, 18 auch als Abdeckringe und das Distanz- bzw. Versteifungselement 19 als Distanzring bezeichnet werden. Über dem Umfang dieses Distanzrings sind mehrere, vorzugsweise bzw. mindestens drei, Gleitelemente 20 äquidistant zueinander positioniert, die in entsprechende Ausnehmungen 22 des Stators 11 eingreifen.

Die Einheit aus den beiden Abdeck- bzw. Führungselementen 17, 18 und dem Distanz- bzw. Versteifungselement 19 sind durch mehrere Befestigungselemente 23, die im gezeigten Ausführungsbeispiel als Nieten ausgebildet sind, miteinander verbunden. Da die Gleitelemente 20 integraler Bestandteil des Distanz- bzw. Versteifungselements 19 sind, ist im Bereich der Gleitelemente 20 lediglich ein derartiges Befestigungselement 23 erforderlich. Die nach dem Stand der Technik erforderliche, separate Verbindung der Gleitelemente 20 mit dem Distanz- bzw. Versteifungselement 19 kann entfallen. Hierdurch wird eine zusätzliche Nietverbindung eingespart. Die erfindungsgemäße Anordnung zeichnet sich demnach durch eine geringe radiale Bauhöhe aus.

Im Sinne der Erfindung wird demnach eine Dichtungsanordnung vorgeschlagen, bei welcher Gleitelemente 20, insbesondere sogenannte Gleitsteine, integraler Bestandteil des sogenannten Distanzrings 19 sind. Hierdurch wird die Anzahl der Einzelbauteile der erfindungsgemäßen Dichtungsanordnung und damit der Montageaufwand reduziert. Die erfindungsgemäße Dichtungsanordnung kann mit geringen Montageschritten und damit mit geringem Fertigungsaufwand hergestellt werden. Die erfindungsgemäße Dichtungsanordnung ist daher kostengünstig realisierbar. Da auf eine separate Befestigung der Gleitsteine 20 am Distanzring 19 verzichtet werden kann, ist eine niedrige, radiale Bauhöhe der Dichtungsanordnung realisierbar. Es sind demnach kompaktere Bauformen möglich. Weiterhin ergeben sich Vorteile dadurch, dass enge Toleranzen für die Gleitsteine 20, die im Sinne der Erfindung integraler Bestandteil des Distanzrings 19 sind, eingehalten werden können. Hierdurch ist eine exakte Speichenzentrierung der erfindungsgemäßen Dichtungsanordnung möglich.

Es sei darauf hingewiesen, dass die Anordnung der Borsten der Bürstendichtung nicht nur vorwiegend radial sondern auch axial mir radialer Abwinkelung der freien Enden sein kann. In diesem Fall wäre die Bürstendichtung als Hakenbürstendichtung ausgeführt.

## Patentansprüche

1. Dichtungs anordnung für eine nicht-hermetische Dichtung einsetzbar zwischen einem Stator (11) und einem Rotor (10) einer Gasturbine, insbesondere im Bereich von statorzugehörigen, rotorkonzentrisch angeordneten Leitschaufeln, mit einer Bürstendichtung (12), welche in einem Aufnahmeraum (16) angeordnet ist, der zwei Abdeck- bzw. Führungselemente (17, 18) umfasst, wobei die Bürstendichtung (12) über Gleitelemente (20), insbesondere über Gleitsteine, speichenzentriert ist, **dadurch gekennzeichnet, dass** zwischen den Abdeck- bzw. Führungselementen (17, 18) zusätzlich ein Distanz- bzw. Versteifungselement (19)angeordnet ist, dass das Distanz- bzw. Versteifungselement (19) ringförmig ausbildet ist, und dass über den Umfang des Distanz- bzw. Versteifungselements (19) mehrere Gleitelemente (20) in das Distanz- bzw. Versteifungselement (19) integriert sind.

2. Anordnung nach Anspruch 1, **dadurch gekennzeichnet, dass** eine dem Stator (11) zugewandte Begrenzungsfläche (21) des Distanz- bzw. Versteifungselements (19) profiliert ausgebildet ist.

3. Anordnung nach Anspruch 2, **dadurch gekennzeichnet, dass** Erhebungen in der Begrenzungsfläche (21) des Distanz- bzw. Versteifungselements (19) die Gleitelemente (20) bilden.

4. Anordnung nach einem der Ansprüche 1 bis 3, **dadurch gekennzeichnet, dass** die Gleitelemente (20) in dem Stator (11), insbesondere den Leitschaufeln, zugeordnete Vertiefungen bzw. Ausnehmungen (22) zur Speichenzentrierung eingreifen.

5. Anordnung nach Anspruch 4, **dadurch gekennzeichnet, dass** die Außenkontur der Gleitelemente (20) der Innenkontur der Vertiefungen bzw. Ausnehmungen (22) entspricht.

6. Anordnung nach einem der Ansprüche 1 bis 5, **dadurch gekennzeichnet, dass** die Abdeck- bzw. Führungselemente (17, 18) und das Distanz- bzw. Versteifungselement (19) über Befestigungselemente (23), insbesondere über mehrere Nieten, miteinander verbunden sind.

## Claims

1. A sealing arrangement for a non-hermetic seal insertable between a stator (11) and a rotor (10) of a gas turbine, in particular in the region of stator-associated guide vanes that are arranged in a concentric manner with respect to the rotor, having a brush seal (12) which is arranged in a receiving space (16) comprising two cover or guide elements (17, 18), wherein the brush seal (12) is centred in a spoke-like manner by way of sliding elements (20), in particular by way of sliding blocks, **characterised in that** arranged between the cover or guide elements (17, 18) there is in addition a spacing or reinforcing element (19), **in that** the spacing or reinforcing element (19) is formed in an annular manner, and **in that** several sliding elements (20) are integrated into the spacing or reinforcing element (19) over the circumference of the spacing or reinforcing element (19).

2. An arrangement according to claim 1, **characterised in that** a boundary surface (21) of the spacing or reinforcing element (19) facing the stator (11) is formed in a profiled manner.

3. An arrangement according to claim 2, **characterised in that** elevations in the boundary surface (21) of the spacing or reinforcing element (19) form the sliding elements (20).

4. An arrangement according to one of claims 1 to 3, **characterised in that** the sliding elements (20) in the stator (11), in particular the guide vanes, engage associated depressions or recesses (22) for spoke-centring.

5. An arrangement according to claim 4, **characterised in that** the outer contour of the sliding elements (20) corresponds to the inner contour of the depressions or recesses (22).

6. An arrangement according to one of claims 1 to 5, **characterised in that** the cover or guide elements (17, 18) and the spacing or reinforcing element (19) are connected together by way of securing elements (23), in particular by way of a plurality of rivets.

## Revendications

1. Système d'étanchéité pour un joint d'étanchéité non hermétique, pouvant être utilisé entre un stator (11) et un rotor (10) d'une turbine à gaz, en particulier dans la zone de pales directrices disposées de manière concentrique par rapport au rotor et appartenant au stator, le système d'étanchéité comportant un joint à brosse (12), qui est disposé dans un espace de réception (16), qui comporte deux éléments de recouvrement ou de guidage (17, 18), le joint à brosse (12) étant centré par rayons par l'intermédiaire d'éléments coulissants (20), en particulier par l'intermédiaire de coulisseaux, **caractérisé en ce qu'**en outre un élément d'écartement ou de renforcement (19) est disposé entre les éléments de recouvrement ou de guidage (17, 18), **en ce que** l'élément d'écartement ou de renforcement (19) est réalisé de manière à présenter une forme annulaire, et **en ce que** plusieurs éléments coulissants (20) sont intégrés dans l'élément d'écartement ou de renforcement (19) sur la périphérie de l'élément d'écartement ou de renforcement (19).

2. Système selon la revendication 1, **caractérisé en ce qu'**une surface de délimitation (21) de l'élément d'écartement ou de renforcement (19), tournée vers le stator (11) est réalisée de manière profilée.

3. Système selon la revendication 2, **caractérisé en ce que** des bosses forment, dans la surface de délimitation (21) de l'élément d'écartement ou de renforcement (19), les éléments coulissants (20).

4. Système selon l'une quelconque des revendications 1 à 3, **caractérisé en ce que** les éléments coulissants (20) viennent en prise avec des creux ou des évidements (22) associés au stator (11), en particulier aux pales directrices, pour le centrage par rayons.

5. Système selon la revendication 4, **caractérisé en ce que** le contour extérieur des éléments coulissants (20) correspond au contour intérieur des creux ou des évidements (22).

6. Système selon l'une quelconque des revendications 1 à 5, **caractérisé en ce que** les éléments de recouvrement ou de guidage (17, 18) et l'élément d'écartement ou de renforcement (19) sont reliés entre eux par l'intermédiaire d'éléments de fixation (23), en particulier par l'intermédiaire de plusieurs rivets.
